Europäisches Patentamt

European Patent Office

Office européen des brevets

(19)

(11) Numéro de publication: **0 167 453**
**B1**

(12) **FASCICULE DE BREVET EUROPEEN**

(45) Date de publication du fascicule du brevet: **23.05.90**

(51) Int. Cl.⁵: **G 09 F 19/00**

(21) Numéro de dépôt: **85401311.7**

(22) Date de dépôt: **27.06.85**

(54) **Système pour faire changer la position d'informations affichées en fonction des mouvements d'une caméra.**

(30) Priorité: **29.06.84 FR 8410404**

(43) Date de publication de la demande:
**08.01.86 Bulletin 86/02**

(45) Mention de la délivrance du brevet:
**23.05.90 Bulletin 90/21**

(84) Etats contractants désignés:
**AT BE CH DE GB IT LI LU NL SE**

(56) Documents cités:
**DE-B-2 461 140**
**US-A-3 704 064**

(73) Titulaire: **Giraud, Daniel**
**6 rue Coste**
**F-78000 Versailles (FR)**
(73) Titulaire: **Charron, Jean**
**2 rue Louise-Michel**
**F-78360 Montesson (FR)**
(73) Titulaire: **Dufrenne, Régis**
**9 rue Antoine de St Exupéry**
**F-78360 Montesson (FR)**

(72) Inventeur: **Giraud, Daniel**
**6 rue Coste**
**F-78000 Versailles (FR)**
Inventeur: **Charron, Jean**
**2 rue Louise-Michel**
**F-78360 Montesson (FR)**
Inventeur: **Dufrenne, Régis**
**9 rue Antoine de St Exupéry**
**F-78360 Montesson (FR)**

(74) Mandataire: **Beauchamps, Georges et al**
**Cabinet Z.Weinstein 20, avenue de Friedland**
**F-75008 Paris (FR)**

Courier Press, Leamington Spa, England.

EP 0 167 453 B1

**Description**

La présente invention a pour objet un procédé d'affichage d'informations, telles que par exemple des messages publicitaires, sur un certain nombre de panneaux à éléments d'affichage disposés dans un lieu de manifestations sportives tel que terrain de football, de basket-ball ou autres destinées à être télédiffusées, et le système d'affichage pour la mise en oeuvre de ce procédé.

On connaît des systèmes d'affichage de messages publicitaires sur un certain nombre de panneaux à éléments d'affichage disposés notamment autour de terrains de football ou de basketball comprenant une commande automatique de l'affichage des messages avec effet de défilement de ceux-ci sur les panneaux considérés.

Cependant de tels systèmes, par le fait que l'affichage défilant s'adresse toujours aux mêmes panneaux, ont pour inconvénients à la longue de ne plus attirer l'attention du public et, en cas de retransmission télévisée, l'affichage du message publicitaire apparaît très rarement entièrement sur un final tel qu'un récepteur de télévision.

La présente invention a pour but d'éliminer les inconvénients ci-dessus des systèmes de l'art antérieur.

Pour cela, l'invention propose un procédé d'affichage d'informations, telles que par exemple des mesaages publicitaires, susceptibles de se déplacer sur un certain nombre de panneaux à éléments d'affichage disposés dans un lieu de manifestations sportives tel que terrain de football, de basket-ball ou sutres destinées à être retransmises à au moins un final de télévision à partir de caméras de télévision avec apparition d'au moins l'un des panneaux d'affichage audit final, ledit procédé étant caractérisé en ce qu'il consiste à déclencher l'affichage d'un message publicitaire à chaque fois qu'au moins l'un des panneaux se trouve dans le champ de prise de vues de l'une des caméras mise en service et à commander le déplacement du message sur les panneaux en fonction des mouvements de la caméra de manière à faire apparaître continuellement le message au final de télévision.

Selon une caractéristique de l'invention, le procédé consiste à déterminer la longueur ou le format du message publicitaire en fonction de la focale de travail de la caméra de manière que le message se trouve toujours en entier dans le champ de prise de vues de la caméra.

Selon une autre caractéristique de l'invention, le procédé consiste à déclencher l'affichage à partir d'un rayonnement infra-rouge émis de la caméra lors de sa mise en service et reçu par au moins un capteur de rayonnement infra-rouge disposé sur l'un des panneaux d'affichage.

Selon encore une autre caractéristique de l'invention, le procédé consiste à déterminer la position du début d'affichage du message sur les éléments de panneaux d'affichage et à déterminer également la partie du message concernée pour chaque panneau suivant la focale de travail de la caméra.

Selon toujours une autre caractéristique de l'invention, la commande de déplacement du message, la position de début d'affichage, la partie de message concernée pour chaque panneau, le type de message à afficher et la vitesse du déplacement du message s'effectuent sous le contrôle d'un dispositif ordinateur.

Selon encore une autre caractéristique de l'invention, le procédé consiste à pulser le rayonnement infra-rouge et à insérer dans la partie active du signal infra-rouge pulsé des signaux d'informations codés indiquant la nature de la caméra utilisée et, le cas échéant, la position relative de la caméra par rapport aux panneaux d'affichage.

Selon encore une autre caractéristique de l'invention, le procédé consiste à prévoir, suivant un programme prédéterminé du dispositif ordinateur, l'emplacement du message sur les différents éléments du panneau d'affichage en fonction du temps d'excitation de chaque capteur de rayonnement infra-rouge lorsque la caméra en mouvement travaille à une focale correspondant à, un champ moyen de prise de vues.

L'invention propose également un système d'affichage pour la mise en oeuvre du procédé comprenant un certain nombre de panneaux à éléments d'affichage disposés dans un lieu de manifestations sportives tel que terrain de football, de basket-ball ou autres, un certain nombre de caméras de télévision pour la retransmission à au moins un final de télévision, tel qu'un récepteur de télévision, de ladite manifestation sportive avec apparition sur ledit final d'au moins l'un des panneaux d'affichage, ledit système étant caractérisé en ce qu'il comprend, associés à chacune des caméras, un élément disposé sur chacune des caméras et sensible à un voyant indicateur de prise antenne de la caméra, et un dispositif de déclenchement, activé par ledit élément sensible, de l'affichage d'un message publicitaire chaque fois qu'au moins l'un des panneaux d'affichage se trouve dans le champ de prise de vues de l'une des caméras mise en service; un dispositif ordinateur recevant les informations de sortie des différents dispositifs de déclenchement et émettant des signaux logiques vers un dispositif de contrôle et de commande de l'affichage associé à chaque panneau pour commander le déplacement du message sur les éléments de panneaux d'affichage en fonction des mouvements de la caméra de manière à faire apparaître continuellement ledit message au final de télévision.

Selon une caractéristique de l'invention, le dispositif de déclenchement comprend un canon à rayonnement infra-rouge aligné dans l'axe de prise de vues de la caméra et un certain nombre de capteurs de rayonnement infra-rouge disposés à intervalles réguliers sur les panneaux d'affichage et reliés au dispositif ordinateur, chaque signal émis en sortie d'un capteur recevant le rayonnement infra-rouge contenant une information identifiant ledit capteur et une autre information relative à la focale de travail de la caméra de manière que le message se trouve toujours en entier dans le champ de prise de vues de la caméra.

Selon une autre caractéristique de l'invention, les signaux logiques émis par le dispositif ordinateur, de préférence codés en ASCII, indiquant outre la commande de déplacement précitée, le message affiché, la position de début d'affichage pour chaque panneau, la partie de message concernée pour chaque panneau et la vitesse de déplacement du message sur les éléments de panneaux d'affichage.

Selon toujours une autre caractéristique de l'invention, le système comprend également un dispositif électronique pour pulser le rayonnement infra-rouge émis par la diode émettrice de chaque canon à rayonnement infra-rouge et des moyens pour insérer dans la partie active du signal pulsé les informations relatives à la nature de la caméra en service et, le cas échéant, à la position de la caméra par rapport aux panneaux d'affichage.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels:

La figure 1 représente en perspective la disposition des panneaux auxquels s'applique la présente invention autour d'un lieu de manifestations sportives tel que par exemple un terrain de football.

La figure 2 représente le type d'éléments d'affichage constituant chaque panneau d'affichage auquel s'applique l'invention.

La figure 3 représente le schéma synoptique fonctionnel du système d'affichage selon l'invention et

La figure 4 représente à titre d'exemple la forme des signaux pulsés émis par chaque canon à rayonnement.

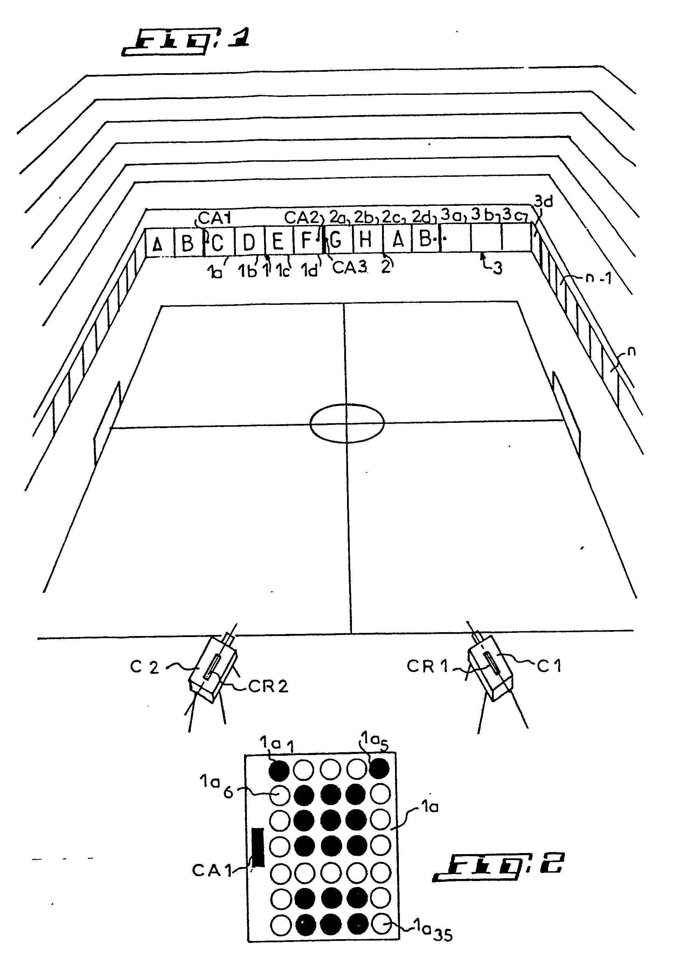

La figure 1 représente un certain nombre de panneaux d'affichage 1, 2, 3,... n disposés autour d'un terrain de football. Dans le cas présent, les panneaux d'affichage sont montés en série sous forme de ligne horizontale mais il est bien entendu qu'ils peuvent être montés également en série sous forme de colonnes verticales permettant ainsi la réalisation de n'importe quelle forme d'affichage.

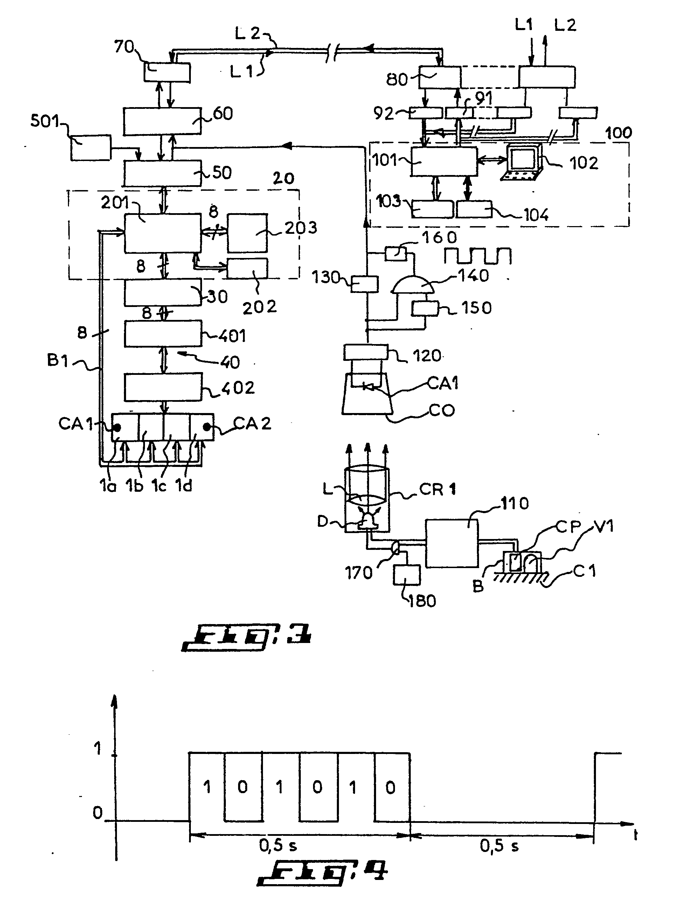

Chaque panneau d'affichage, par exemple le panneau 1, comporte plusieurs éléments d'affichage dans le cas présent au nombre de quatre référencés 1a, 1b, 1c, 1d et disposés côte à côte. Chacun de ces éléments d'affichage, représenté en détails en figure 2, contient 35 points d'affichage $1a_1$-$1a_{35}$ disposés en une matrice de $5 \times 7$ pastilles permettant d'afficher n'importe quel caractère alphanumérique. De tels éléments d'affichage sont connus et ne seront décrits que très brièvement à titre de compréhension.

Chaque caractère est formé par les pastilles bistables qui présentent tour à tour une face colorée ou une face noire sous l'influence d'un noyau magnétique dont le champ est contrôlé par une impulsion de courant traversant à vitesse élevée la bobine de chaque pastille. Chaque point d'affichage renferme une mémoire magnétique et conserve indéfiniment le même état lorsqu'on coupe le courant. Chaque rangée de points a une ligne d'affichage et d'effacement qui est reliée à l'extrémité positive de chaque bobine de la rangée par l'intermédiaire de diodes de blocage. L'extrémité négative de chaque bobine dans le sens vertical est reliée à un circuit de retour vertical commun. Lorsqu'on donne une impulsion à la ligne d'affichage horizontale et que l'on ferme le circuit de retour vertical, on affiche le point à l'intersection. Tous les éléments d'affichage sont reliés à un dispositif de commande, qui sera décrit ultérieurement, par l'intermédiaire de connecteurs (non représentés) placés à la base des panneaux d'affichage.

Il va de soi que d'autres types d'éléments d'affichage, tels que par exemple les éléments d'affichage 35 points à diodes électro-luminescentes peuvent convenir dans le cadre de la présente invention, l'essentiel étant que ces éléments d'affichage soient visibles à une distance relativement éloignée, par exemple de 60 mètres.

La figure 1 montre également la présence de caméras de télévision C1, C2 destinées à une retransmission télévisée de la manifestation sportive, les signaux émis par ces caméras étant traités de façon connue en soi par une régie finale diffusant la manifestation sportive en différé ou en direct vers plusieurs finaux de télévision tels que des récepteurs de télévision. Les caméras utilisées peuvent être des caméras mobiles, des caméras fixes pouvant travailler à une focale correspondant à un champ large de prise de vues ou à un champ moyen de prise de vues. Dans le cas présent, à titre de simplification, les caméras C1 et C2 sont des caméras fixes, la caméra C1 travaillant en champ large tandis que la caméra C2 travaille en champ moyen.

Chaque caméra de télévision utilisée pour une émission directe ou en différé, est équipée d'un canon à rayonnement infra-rouge référencé CR1 pour la caméra C1 et CR2 pour la caméra C2. Chaque canon CR1, CR2 est aligné dans l'axe de prise de vues de la caméra associée. Chacun de ces canons a été représenté en figure 1 de façon schématique mais il est bien entendu qu'il est fixé sur chacune des caméras de façon appropriée, par exemple par l'intermédiaire de pattes d'attache.

Les canons CR1 et CR2 émettent un rayonnement infra-rouge de fréquence identique correspondant par exemple à une longueur d'onde de 100 nanomètres et sont alimentés par batteries autonomes.

Comme cela est connu en soi, chaque caméra comporte également un indicateur visuel V1, V2 de présence antenne avec ainsi allumage de chaque voyant lors de prise antenne et extinction du voyant lorsque la caméra est hors antenne.

Chaque panneau d'affichsge 1, 2, 3... n comprend des capteurs du rayonnement infra-rouge émis par chaque canon CR1, CR2. La figure 1 montre l'utilisation de deux capteurs de rayonnement infra-rouge disposés au voisinage de chacune des extrémités longitudinales de chaque panneau et référencés CA1, CA2 pour le panneau d'affichage 1. Le nombre de capteurs est donné à titre indicatif et dépend évidemment de la dimension de chaque panneau d'affichage.

En se référant maintenant à la figure 3, il va être décrit le système complet d'affichage faisant l'objet de la présente invention.

Ce système comprend un dispositif de contrôle et de commande 20 pour l'affichage de caractères au panneau d'affichage 1, autant de dispositifs de contrôle et de commande étant prévus qu'il y a de panneaux d'affichage. Le dispositif de contrôle et de commande 20 comporte un microprocesseur 201, par exemple le MC 6809 de Motorola, dont le fonctionnement est contrôlé par un programme stocké dans la mémoire PROM effaçable 202 d'une capacité par exemple de 3072 mots de 8 bits. Une mémoire vive 203, par exemple du type RAM est bi-directionnellement reliée au microprocesseur 201 et a une capacité par exemple de 256 mots de 8 bits. Dans la mémoire vive 203 sont stockés les codes de chaque caractère susceptible d'être affiché à l'un des éléments d'affichage 1a-1d du panneau 1.

Le microprocesseur 201 est bi-directionnellement relié par un bus 8 bits à un circuit d'interface 30 tel qu'un PIA de Motorola, les ports de sortie du circuit d'interface étant reliés à un circuit de commande bi-polaire 40 comprenant des circuits décodeurs de données 401 reliés à des circuits de sortie 402 commandant les éléments d'affichage suivant la technique X-Y ou colonne-rangée.

Le microprocesseur 201 adresse directement les éléments d'affichage 1a-1d par l'intermédiaire du bus d'adresse B1.

Par ailleurs, le microprocesseur 201 est relié par une liaison bi-directionnelle à un circuit d'interface 50 pour communications synchrones tel que le circuit USART 8251 A de Intel. Un générateur de cadence 501 est relié au circuit d'interface 50 pour fournir le débit des informations lors de communications asynchrones, un tel débit pouvant être réglé sur une plage allant de 110 à 9 600 bauds.

Le circuit d'interface 50 est relié à un circuit modulateur-démodulateur 60 connu en soi lequel est lui-même relié au circuit d'interface RS 232C référencé et définissant un mode de liaison série. Ce circuit d'interface peut être également une boucle de courant 20 mA également connue en soi en tant que mode de liaison.

La sortie du circuit d'interface 70 est reliée par l'intermédiaire d'un câble à deux conducteurs du type téléphonique L1, L2 à un circuit modulateur-démodulateur 80. Le circuit 80 est relié à un microprocesseur 101 faisant partie d'un dispositif ordinateur 100 par l'intermédiaire d'un circuit d'interface d'entrée d'informations 92 vers le microprocesseur et d'un circuit d'interface de sortie d'informations 91 du microprocesseur. Ces circuits d'interface peuvent être également des circuits PIA de Motorola. Le microprocesseur 101 est bi-directionnellement relié à une unité formant terminal 102 et à une mémoire PROM 103 dans laquelle est stocké un programme de contrôle du fonctionnement du microprocesseur. Une mémoire vive 104 du type RAM est également bi-directionnellement reliée au microprocesseur 101 et contient les informations codées relatives à toute décision d'affichage comme il sera expliqué ultérieurement. Bien entendu, l'unité 102 est destinée à composer les messages codés et stockés ensuite dans la mémoire vive 104.

La figure 3 montre la présence du voyant V1 de prise antenne de la caméra C1 et contre lequel est appliqué un élément sensible à la lumière émise par ce voyant, cet élément pouvant être par exemple une cellule photoélectrique CP isolée de la lumière ambiante par un boîtier représenté de façon schématique et référencé par B.

La cellule photo-électrique, lorsque excitée par le voyant V1 de présence antenne, donne l'ordre d'émission du rayonnement infra-rouge du canon CR1 de la caméra correspondante.

La cellule CP est reliée à un circuit électronique 110 qui, lorsque mis en service suite à l'excitation de la cellule CP, permet de pulser le rayonnement infra-rouge émis par la diode émettrice D du canon infra-rouge CR1. L'art antérieur fournit différentes sortes de circuits électroniques susceptibles de pulser un rayonnement infra-rouge. En conséquence, un tel circuit n'a pas à être décrit plus en détail. Il est à noter que la diode émettrice de rayonnement infra-rouge D peut être la diode LD271 fabriquée par Siemens assurant une portée notable du rayonnement ainsi qu'une excellente directivité de celui-ci. Une lentille est montée de façon appropriée à l'intérieur du canon CR1 de manière à rendre parallèle le faisceau de la diode D. Avec un tel agencement, une portée de rayonnement d'environ 100 mètres peut être facilement atteinte.

Chaque capteur de rayonnement infra-rouge, dans le cas présent le capteur CA1 est constitué par une diode PIN montée éventuellement à l'intérieur d'un cornet CO pour une meilleure réception du rayonnement infra-rouge émis par le canon CR1.

Le capteur CA1 est relié à un circuit de mise en forme 120 du signal de sortie du capteur. La sortie du circuit 120 est reliée à un circuit générateur de signaux d'adresse 130 dont la sortie est reliée à l'entrée du circuit modulateur-démodulateur 60.

La sortie du circuit de mise en forme 120 est également reliée d'une part, à une entrée d'une porte ET 140 et, d'autre part, à l'entrée d'un circuit monostable 150 dont la sortie est reliée à l'autre entrée de la porte ET 140. La sortie de ls porte ET 140 est reliée par l'intermédiaire d'un circuit à retard 160 à la sortie du circuit 130.

La figure 3 montre également la présence d'une porte ET 170 reliée en série par l'une de ses entrées et sa sortie à la diode D, l'autre borne d'entrée de la porte ET étant reliée à un circuit horloge 180. Le rôle du circuit constitué par la porte 170 et l'horloge 180 est d'insérer dans la partie active, c'est-à-dire au niveau haut, du signal pulsé émis vers la diode D des signaux d'identification de la nature de la caméra en service. Ainsi, puisque Is caméra C1 a été définie comme étant une caméra travaillant en champ large, les signaux insérés dans la partie active du signal pulsé seront représentatifs de ce type de caméra. La figure 4 représente de façon détaillée les signaux portés par le rayonnement infra-rouge émis. Le rayonnement infra-rouge émis par la diode D est pulsé pendant par exemple 0,5 seconde suivi d'une interruption de même durée. Dans les impulsions de niveau haut du signal pulsé sont insérés plusieurs signaux impulsionnels identifiant la nature de la caméra. Dans le cas présent, trois signaux impulsionnels sont insérés ce qui aboutit au code binaire 101010.

Il est par ailleurs à noter que l'entrée série du circuit d'interface 50 accepte des informations asynchrones série codées ASCII représentatives du message d'entrée provenant du dispositif ordinateur 100. Ce code, connu en soi, peut éventuellement être muni du contrôle de parité afin de déceler d'éventuelles erreurs intervenus au cours de la transmission.

Il va être maintenant décrit le fonctionnement du système d'affichage selon la présente invention.

Lors de la prise antenne de la caméra C1, le voyant V1 s'allume excitant la cellule photo-électrique CP donnant l'ordre d'émission du rayonnement infra-rouge de la diode D, ce rayonnement portant les informations d'identification de la caméra.

Durant le mouvement de la caméra correspondant par exemple à un panoramique, le canon à rayonnement infrarouge CR1 est pointé par exemple sur le capteur CA1 qui reçoit ainsi le rayonnement infra-rouge. Le signal électrique pulsé correspondant apparaissant en sortie du capteur CA1, après mise en forme, est envoyé d'une part vers le générateur de code d'adresse 130 qui est alors commandé pour produire un signal d'adresse correspondant au capteur excité et, d'autre part, au circuit monostable 150 dont la sortie est alors à un niveau haut durant 0,5 seconde correspondant à Is durée active du niveau haut du signal pulsé. On obtient ainsi en sortie de le porte ET 140 le signal impulsionnel d'identification dela caméra inséré préalablement dans le signal pulsé. Ce signal codé d'identification est retardé de façon à être transmis en série vers le circuit modulateur-démodulateur 70 après les signaux d'adresse issus du générateur 130. Ces informations sont alors transmises via la ligne L1, L2, le circuit modulateur démodulateur 80 et le circuit d'interface 92 au microprocesseur 102 du dispositif ordinateur 100. Le dispositif ordinateur est alors informé de l'excitation du capteur CA1 par le rayonnement infra-rouge provenant de la caméra C1. Après traitement de ces informations et sous le contrôle d'un programme dans la mémoire PROM 103 le dispositif ordinateur 100 émet vers le dispositif de contrôle et de commande 20 une série de signaux codés ASCII comprenant une partie adresse indiquant le panneau où doit avoir lieu l'affichage (ici le panneau 1) ainsi que le ou les éléments d'affichage concernés, et une partie données indiquant le caractère à afficher sur le ou les éléments d'affichage concernés. Ces signaux codés sont alors reçus par le microprocesseur 201 qui, sous le contrôle du programme dans la mémoire 202 va adresser de façon appropriée la mémoire 203 dont le contenu de certaines cellules mémoires correspondant au ou aux caractères à afficher sera décodé par le circuit 401 pour commander le ou les éléments d'affichage concernés.

Le processus ci-dessus décrit d'émission de ces signaux d'informations codés en ASCII se produit également vers d'autres panneaux d'affichage adressés en fonction de la nature de le caméra.

Ainsi, puisque la caméra C1 travaille en champ large, et que le dispositif ordinateur 100 est renseigné de la nature de cette caméra, les séries de signaux codés émis par le dispositif 100 adressent alors également par exemple deux panneaux adjacents à gauche du panneau 1 au vu de la figure 3 et deux autres panneaux adjacents à droite du panneau 1, chaque dispositif de contrôle et de commande associé à chacun des panneaux recevant et traitant bien entendu chaque série de signaux codés. Les dispositifs de contrôle et de commande adressent également le ou les éléments des panneaux concernés pour afficher le ou les caractères correspondant du message publicitaire à afficher. Ce message, à l'instant où le capteur CA1 est excité est donc affiché sur les cinq panneaux d'affichage disposés côte à côte, la longueur ou le format du message correspondant sensiblement au champ de prise de vues de la caméra C1 de sorte que ce message puisse apparaître intégralement sur un écran d'un récepteur de télévision.

Du fait que la caméra C1 travaille en champ large, les déplacements panoramiques sont faibles. On peut donc lui affecter un type de message de grande longueur et un certain nombre de panneaux, par exemple cinq comme décrit précédemment, pour afficher ce message. On peut donc considérer que l'affichage de grande longueur du message s'effectuera lors de la prise antenne de la caméra C1 malgré les faibles déplacements de la caméra où le rayonnement infra-rouge issu du canon CR1 exciterait l'un ou l'autre des capteurs situés de part et d'autre du capteur CA1.

En résumé, lorsque la prise de vues d'une manifestation sportive s'effectue à partir d'une caméra travaillant en champ large, le système ordinateur 100 affecte par le biais des circuits de contrôle et de commande 20 le type de message à afficher sur les panneaux après excitation de l'un des capteurs de rayonnement infra-rouge dans le champ de prise de vues.

Bien entendu, si une autre caméra à champ de prise de vues large est mise en service après l'utilisation de la caméra C1, le dispositif ordinateur l00 donne l'ordre d'effacement de l'information affichée sur les cinq panneaux ci-dessus et affecte à d'autres panneaux dans le champ de prise de vues de la deuxième caméra le type de message à afficher qui peut être bien entendu différent du premier message affiché.

Le fonctionnement du système d'affichage va maintenant être expliqué lorsqu'est utilisée la caméra C2 ayant un champ de prise de vues moyen ou relativement faible. Dans ce cas, les déplacements de la caméra sont grands. Pour expliquer le principe de base du fonctionnement du système selon l'invention lors de la prise de vues à partir d'une caméra à champ moyen, on admettra que le message à afficher peut être contenu entièrement sur 8 éléments consécutifs de panneaux d'affichage et on supposera que le message affiché soit le message ABCDEFGH.

Lors de la prise antenne de la caméra C2, le voyant V2 s'allume pour exciter la cellule photo-électrique CP correspondante qui commande alors le circuit électronique 110 permettant de pulser le rayonnement infra-rouge émis par la diode D du canon CR2 de façon identique au rayonnement infra-rouge émis par la diode D du canon CR1. Le rayonnement infra-rouge émis par la diode D déclenche alors le processus d'affichage lorsqu'il est reçu par un capteur de l'un des panneaux à savoir par exemple le capteur CA2 du panneau 1. Des signaux d'informations sont alors émis en série sur la ligne d'entrée du circuit modulateur-démodulateur 70 vers le système ordinateur 100, ces signaux comprenant le code d'adresse identifiant le capteur CA2 et les signaux logiques codés indiquant que la caméra C2 est une caméra à champ moyen. A partir de ces informations reçues, le dispositif ordinateur 100 émet des séries de signaux codés en ASCII vers les circuits de contrôle et de commande 20 associés aux panneaux où doit avoir lieu l'affichage considéré. En fait, le dispositif ordinateur 100, à partir des informations reçues et suivant un programme dans la mémoire PROM 103, est capable d'émettre les signaux codés ASCII indiquant la position du début d'affichage du message sur les panneaux d'affichage et la partie de message concernée pour chaque panneau d'affichage. Le processus d'adressage, de décodage et d'affichage à partir des dispositifs de contrôle et de commande 20 s'effectuent selon le même processus décrit dans le cas de l'utilisation de la caméra à champ large.

La figure 1 montre précisément la position du message ABCDEFGH tel qu'affiché sur les différents éléments de panneau d'affichage après excitation du capteur CA2. Ainsi, les caractères CDEF du message sont affichés respectivement sur les éléments 1a-1d du panneau 1 tandis que les caractères EOH sont affichés respectivement sur les éléments d'affichage 2a-2b, les caractères A et B étant affichés respectivement sur les deux éléments d'affichage consécutifs précédant l'élément d'affichage la. Il est à noter que les caractères A et B du début du message affiché sont également affichés respectivement aux éléments d'affichage 2c et 2d du panneau 2, ceci afin d'anticiper les déplacements ou mouvements de la caméra C2 lors d'un panoramique normal et continu avec excitation successive des capteurs, ce panoramique allant dans le cas présent de la gauche vers la droite par rapport à la figure 1.

Lorsque la caméra continue son mouvement panoramique avec excitation du capteur CA3 du panneau 2, le dispositif ordinateur gère à nouveau ls position ou emplacement du message sur les panneaux en décalant vers la droite le message affiché en figure 1 de deux éléments d'affichage avec toujours affichage après le dernier caractère H des deux premiers caractères A B du message (ces deux caractères A et B seront alors affichés aux éléments d'affichage 3b et 3c du panneau 3).

En pratique, le déplacement du message s'effectue dans un temps supérieur à la seconde pour des raisons de stabilisation de l'affichage du message due à l'inertie des pastilles d'affichage. Le dispositif ordinateur 100 informera donc les dispositifs de contrôle et de commande 20, chaque seconde, le message à afficher, la position de début d'affichage pour chaque panneau ainsi que la partie du message concernée pour chaque panneau après excitation d'un capteur, la commande de déplacement après excitation d'un capteur suivant. La vitesse de déplacement est commandée également par le dispositif ordinateur 100, cette vitesse étant en fait observée comme le déplacement du message dans une unité de temps.

Il est à noter que le processus d'affichage ci-dessus décrit s'opère lorsque le capteur CA2 et les autres capteurs successifs ont été excités pendant une durée supérieure à un temps prédéterminé par exemple de une seconde.

A partir du principe de fonctionnement énoncé ci-dessus, il est possible, à partir du programme stocké dans la mémoire PROM 103 du système ordinateur 100 de prévoir l'affichage du message sur les différents éléments de panneau d'affichage.

L'exemple ci-dessus donné illustre le cas d'un panoramique allant de la gauche vers la droite par rapport à la figure 1 et où les capteurs CA1 et CA2 sont successivement excités.

Si le capteur CA1 est excité pendant une durée inférieure au temps ci-dessus mentionné de une seconde, c'est-à-dire lorsque le rayonnement infra-rouge émis par la caméra C2 est reçu par le capteur CA1 pendant une durée inférieure à la seconde, le programme du dispositif ordinateur 100 est conçu de manière qu'aucun ordre d'affichage ne soit envoyé sur la ligne L1, L2 ou qu'aucun changement de message s'effectue s'il y avait déjà affichage du message ABCDEFGH avant excitation du capteur CA1. Ceci est également le cas lorsque l'on passe de la caméra C2 à une autre caméra travaillant en champ moyen avec excitation d'un capteur pendant une durée inférieure à la seconde. Puis, si le capteur CA2 est excité pendant plus d'une seconde pendant le mouvement panoramique de la caméra C2, le dispositif ordinateur 100 émet un ordre d'affichage à 6 éléments d'affichage en arrière ou à gauche du capteur CA2 par rapport à la figure 1, ce qui correspond d'ailleurs à la configuration d'affichage représentée sur cette figure et décrite précédemment. Par contre, si le capteur CA2 est excité pendant une durée inférieure à la seconde après que le capteur CA1 ait été excité également pendant une durée inférieure à la seconde, ce qui correspond à un déplacement très rapide de la caméra C2, alors il y aura un affichage du message ABCDEFGH à partir de l'élément d'affichage 2a du panneau 2 c'est-à-dire que le caractère A du début du message à afficher se trouvera affiché sur cet élément d'affichage.

Bien entendu, d'autres processus prévisionnels d'affichage de message sur des panneaux peuvent être imaginés sans sortir du cadre de la présente invention, ceux-ci en fonction de la longueur du message à afficher, de la distance entre la caméra travaillant en plan moyen et les panneaux d'affichage.

Par ailleurs, le programme dans la mémoire PROM 103 est également conçu non seulement pour centrer le mieux possible le message dans le champ de la caméra à la manière expliquée ci-dessus mais également pour permettre la correction d'anomalies altérant le principe de base. De telles anomalies peuvent avoir lieu lorsqu'il y a perte du rayonnement infra-rouge reçu par l'un des capteurs, ou que deux capteurs sont sollicités par un même rayonnement infra-rouge. Le programme du dispositif ordinateur peut également tenir compte d'évènements pouvant se produire durant une retransmission télévisée tels que par exemple un changement de type de caméra ou un changement de prise de vues d'une zone d'affichage vers une autre zone d'affichage.

Ces anomalies et évènements vont être détaillés tour à tour ci-dessous.

Le cas de la perte du rayonnement infra-rouge se produit lorsque l'un des capteurs sollicité par un rayonnement infra-rouge est momentanément masqué après excitation de deux capteurs consécutifs par exemple CA1, CA2 (soit un mouvement panoramique lent de la caméra) ou CA1, CA4 (soit un mouvement rapide de la caméra) ou lorsque la caméra s'est momentanément déplacée de manière que le faisceau infra-rouge n'atteigne plus les capteurs. Dans la première hypothèse le dispositif ordinateur interpole la vitesse du déplacement de la caméra et va commander l'affichage dans le cas des vitesses lentes un élément d'affichage plus loin que le dernier élément d'affichage pris en compte tandis qu'en vitesse rapide, l'affichage sera commandé à deux éléments d'affichage plus loin que le dernier pris en compte. Dans l'hypothèse où deux capteurs sont sollicités, par exemple, les capteurs adjacents CA1 et CA2, deux cas sont à distin-guer. Le premier est le cas où il y a excitation des deux capteurs pendant une durée inférieure à une seconde; il n'y a alors pas de changement d'état de l'affichage. Dans le cas contraire, c'est-à-dire où la durée d'excitation dépasse la seconde le dispositif ordinateur 100 commande l'affichage de la même manière que dans le cas de la perte du signal, c'est-à-dire si la caméra se déplace lentement le dispositif ordinateur commande l'affichage un élément d'affichage plus loin que le dernier élément d'affichage pris en compte tandis qu'en vitesse rapide de la caméra, l'affichage sera commandé deux éléments d'affichage plus loin que le dernier pris en compte.

L'éventualité d'un changement de caméra peut être la suivante: au bout de deux secondes, la prise de vues passe de la caméra C2 à la caméra C1 (donc du champ de prise de vues moyen au champ de prise de vues large) et s'effectue toujours à partir de la caméra C2. Le dispositif ordinateur 100 commande alors l'affichage en format long avec début d'affichage quatre éléments d'affichage avant le capteur excité ou sollicité. Si avant l'expiration des deux secondes la prise de vues passe de la caméra C2 à la caméra C1 et que la prise de vues revient à la caméra C2, il n'y a alors pas de changement d'état de l'affichage. Ce processus est également valable en cas inverse du changement des prises de vues. Ainsi, ces changements de caméra gérés par le dispositif ordinateur montrent que chaque capteur de rayonnement infra-rouge n'est pris en compte qu'au bout de deux secondes.

L'éventualité de changement de zones d'affichage peut se résumer à deux cas. Le premier est le cas où il y a changement brutal de deux zones visées comprenant les panneaux d'affichage 1, 2 vers une zone comportant les panneaux n-1 et n avec interruption de continuité d'excitation des capteurs de rayonnement infra-rouge entre les deux zones. Le dispositif ordinateur, après l'expiration d'une durée d'une seconde pour valider la nouvelle position de la caméra, commande l'effacement du message affiché aux panneaux 1, 2 de la première zone et commande l'affichage sur les panneaux n-1, n deux éléments d'affichage avant le capteur sollicité (cas du format court) ou quatre éléments d'affichage avant ce capteur (cas du format long) si le changement de zone s'accompagne également d'un changement de caméra travaillant en champ moyen en une caméra travaillant en champ large. Le deuxième cas est le passage de la prise de vues de ls première zone vers la prise de vues de la deuxième sans interruption de continuité donc d'excitation des capteurs de rayonnement infra-rouge mais avec une durée d'excitation de ces capteurs inférieure à une seconde. Dans ce cas, le dispositif ordinateur 100 donne un ordre de début d'affichage à partir du capteur situé quatre capteurs plus loin que le troisième capteur excité pendant la durée inférieure à la seconde et qui a permis l'interpolation de la vitesse de déplacement de la caméra. Le dispositif ordinateur permet donc à partir des données reçues par les capteurs excités pendant une durée inférieure à la seconde d'anticiper le déplacement rapide de la caméra.

Il est bien entendu que tous les cas de figures ci-dessus exposés sont facilement programmables par un homme du métier et que d'autres cas ou éventualités peuvent être imaginés sans sortir du cadre de l'invention pourvu que l'affichage d'un message publicitaire suive pratiquement les mouvements de la caméra avec apparition entière de ce message sur un final de télévision.

## Revendications

1. Procédé d'affichage d'informations, telles que par exemple des messages publicitaires, susceptibles de se déplacer sur un certain nombre de panneaux à éléments d'affichage disposés dans un lieu de manifestations sportives tel que terrain de football, de basket-ball ou autres destinées à être retransmises à au moins un final de télévision à partir de caméras de télévision avec apparition d'au moins l'un des panneaux d'affichage audit final, caractérisé en ce qu'il consiste à déclencher l'affichage d'un message publicitaire à chaque fois qu'au moins l'un des panneaux se trouve dans le champ de prise de vues de l'une des caméras mise en service et à commander le déplacement du message sur les panneaux en fonction des mouvements de la caméra de manière à faire apparaître continuellement ledit message audit final de télévision.

2. Procédé selon la revendication 1, caractérisé en ce qu'il consiste à déterminer ls longueur ou le format du message publicitaire précité en fonction de la focale de travail de la caméra précitée de manière que le message se trouve toujours en entier dans le champ de prise de vues de la caméra.

3. Procédé selon la revendication 1 ou 2, caractérisé en ce qu'il consiste à déclencher l'affichage précité à partir d'un rayonnement infra-rouge émis de la caméra lors de sa mise en service et reçu par un capteur de rayonnement infra-rouge disposé sur l'un des panneaux d'affichage.

4. Procédé selon l'une des revendications précédentes, caractérisé en ce qu'il consiste à déterminer la position du début d'affichage du message précité sur le panneau d'affichage et à déterminer également la partie du message concernée pour chaque panneau d'affichage suivant la focale de travail de la caméra précitée.

5. Procédé selon l'une des revendications précédentes, caractérisé en ce que la commande précitée de déplacement du message, la position précitée de début d'affichage, la partie précitée du message concernée pour chaque panneau, le type de message à afficher et la vitesse de déplacement du message s'effectuent sous le contrôle d'un dispositif ordinateur.

6. Procédé selon l'une des revendications précédentes, caractérisé en ce qu'il consiste à pulser le rayonnement infra-rouge précité et à insérer dans la partie active du signal infra-rouge pulsé des signaux d'informations codés indiquant la nature de la caméra utilisée et, le cas échéant, la positionrelative de la caméra par rapport aux panneaux d'affichage.

7. Procédé selon l'une des revendications précédentes, caractérisé en ce qu'il consiste à émettre vers le dispositif ordinateur un signal d'identification du capteur de rayonnement infra-rouge excité.

8. Procédé selon l'une des revendications précédentes, caractérisé en ce qu'il consiste à prévoir, suivant un programme prédéterminé du dispositif ordinateur, l'emplacement du message sur les différents éléments de panneaux d'affichage en fonction du temps d'excitation de chaque capteur de rayonnement infra-rouge lorsque la caméra en mouvement travaille à une focale correspondant à un champ moyen de prise de vues.

9. Procédé selon l'une des revendications précédentes, caractérisé en ce qu'il consiste également, lorsqu'aucun rayonnement infra-rouge est reçu par un capteur de rayonnement infra-rouge après par exemple excitation de deux capteurs de rayonnement infra-rouge précédents sur les panneaux, et suivant le programme précité, à déterminer l'emplacement du message à afficher sur les différents éléments de panneaux d'affichage en tenant compte de la vitesse de déplacement de la caméra.

10. Procédé selon l'une des revendications précédentes, caractérisé en ce qu'en cas de passage d'une caméra travaillant en champ moyen de prise de vues à une caméra travaillant en champ large de prise de vues ou vice-versa, et que l'on reste dans le dernier champ de prise de vues considéré après l'expiration d'une période prédéterminée, il consiste à déterminer de façon appropriée l'emplacement du message sur les différents éléments de panneaux d'affichage.

11. Procédé selon l'une des revendications précédentes, caractérisé en ce que dans le cas d'un changement brutal de prise de vues d'une zone vers une autre zone après excitation au delà d'un temps prédéterminé d'un capteur à la nouvelle position de la caméra correspondant à l'autre zone visée il consiste à déterminer l'emplacement du message sur les différents éléments de panneaux en fonction de la vitesse du déplacement de la caméra de la zone à l'autre.

12. Procédé selon l'une des revendications 1 à 11, caractérisé en ce que dans le cas de passage d'une zone de prise de vues de la caméra vers une autre zone de prise avec excitation consécutive des capteurs de rayonnement infra-rouge sur les panneaux d'affichage d'une durée inférieure à un temps prédéterminé, il consiste à débuter l'affichage du message sur un nombre spproprié d'éléments de panneaux d'affichage à partir du capteur situé quatre capteurs plus loin que le troisième capteur ayant permis l'interpolation de la vitesse de déplacement de la caméra de la zone vers d'autres zones.

13. Système d'affichage pour la mise en oeuvre du procédé selon l'une des revendications 1 à 12 comprenant un certain nombre de panneaux à éléments d'affichage disposés dans un lieu de manifestations sportives tel que terrain de football, de basket-ball ou autres, un certain nombre de caméras de télévision pour une retransmission à au moins un final de télévision, tel qu'un récepteur de télévision, de ladite manifestation sportive avec apparition sur ledit final d'au moins l'un des panneaux d'affichage, caractérisé en ce qu'il comprend, associés à chacune des caméras (C1, C2), un élément (CP) disposé sur chacune des caméras et sensible à un voyant indicateur (V1; V2) de présence antenne de la caméra et un dispositif de déclenchement (CR1, CA1..; CR2, CA1,...), activé par ledit élément sensible de l'affichage d'un message publicitaire chaque fois qu'au moins l'un des panneaux d'affichage se trouve dans le champ de prise de vues de la caméra mise en service; un dispositif ordinateur (100) recevant les informations en sortie des différents dispositifs de déclenchement et émettant des signaux logiques vers chacun des dispositifs de contrôle et de commande (20) de l'affichage associé à chaque panneau (1, 2,... n) pour commander le déplacement du message sur les éléments de panneaux d'affichage en fonction des mouvements de la caméra de manière à faire apparaître continuellement ledit message au final de télévision.

14. Système selon la revendication 13, caractérisé en ce que le dispositif de déclenchement précité comprend un canon à rayonnement infrarouge (CR1; CR2) aligné dans l'axe de prise de vues de la caméra précitée et un certain nombre de capteurs de rayonnement infra-rouge (CA1, CA2,... CAn) disposés à intervalles réguliers sur le panneau d'affichage et reliés au dispositif ordinateur (100), chaque signal émis en sortie d'un capteur recevant le rayonnement infra-rouge contenant une information identifiant ledit capteur et une autre information relative à la focale de travail de la caméra de manière que le dispositif ordinateur adresse les différents éléments de panneaux d'affichage pour afficher le message sur le panneau suivant une longueur correspondant à la focale de la caméra utilisée.

15. Système selon la revendication 13 ou 14, caractérisé en ce que les signaux logiques précités émis par le dispositif ordinateur (100) précité, et de préférence codés en ASCII, indiquent outre la commande de déplacement précitée, le type de message à afficher, la position du début d'affichage pour chaque panneau d'affichage, la partie du message concernée pour chaque panneau et la vitesse de déplacement du message sur les éléments du panneau d'affichage.

16. Système selon l'une des revendications 13 à 15, caractérisé en ce qu'il comprend un dispositif électronique (110) pour pulser le rayonnement infra-rouge émis par la diode émettrice (D) du canon à rayonnement infra-rouge (CR1, CR2) de la caméra en service et des moyens (170, 180) pour insérer dans la partie active du signal pulsé des informations relatives à la nature de la caméra en service et, le cas échéant, à la position de la caméra par rapport aux panneaux d'affichage.

17. Système selon l'une des revendications 13 à 16, caractérisé en ce que l'élément sensible (CP) précité comprend une cellule photo-électrique disposée contre le voyant indicateur (V1, V2) antenne de chaque caméra.

18. Système selon l'une des revendications 13 à 17, caractérisé en ce que chaque dispositif de contrôle et de commande (20) comprend un microprocesseur (201) relié à une mémoire vive (203) dans laquelle sont stockées les parties des messages à afficher.

**Patentansprüche**

1. Verfahren zur Anzeige von Informationen, wie z.B. Publizitätsmitteilungen, die sich auf einer gewissen Anzahl von an einem Sportveranstaltungsort wie einem Fußballfeld, Basketballfeld oder dergleichen angeordneten, mit Anzeigeelementen versehenen Tafeln bewegen können und auf mindestens ein Fernsehterminal mit Hilfe von Fernsehkameras übertragen werden können, wobei wenigstens eine Anzeigetafel auf dem Terminal erscheint, dadurch gekenneichnet, daß man jedes Mal die Anzeige einer Publizitätsmitteilung auslöst, wenn wenigstens diese eine Tafel sich in dem Bildaufnahmefeld einer im Betrieb befindlichen Kamera befindet, und die Bewegung der Mitteilung auf den Tafeln in Abhängigkeit von den Bewegungen der Kamera so gesteuert wird, daß ständig die Mitteilung auf dem Fernsehterminal erscheint.

2. Verfahren nach Anspruch 1, dadurch gekennzeichnet, daß die Länge oder das Format der Publizitätsmitteilung in Abhängigkeit von dem Arbeitsfokus der Kamera so gesteuert wird, daß sich die Mitteilung immer in ihrer Gesamtheit in dem Bildaufnahmefeld der Kamera befindet.

3. Verfahren nach Anspruch 1 oder 2, dadurch gekennzeichnet, daß die Anzeige von einer Infrarotstrahlung ausgehend, die von der Kamera bei ihrer Inbetriebnahme ausgesendet und von wenigstens einem auf der genannten einen Anzeigetafel angeordneten Infrarotstrahlungsfühler empfangen wird, ausgelöst wird.

4. Verfahren nach einem der vorangehenden Ansprüche, dadurch gekennzeichnet, daß die Position des Anfangs der Anzeige der Mitteilung auf den Anzeigetafelelementen bestimmt und ferner auch der Teil der Mitteilung bestimmt wird, der jede Tafel gemäß dem Arbeitsfokus der Kamera betrifft.

5. Verfahren nach einem der vorangehenden Ansprüche, dadurch gekennzeichnet, daß die Steuerung der Bewegung der Mitteilung, die Position des Anzeigeanfangs, der gennante jede Tafel betreffende Anzeigeteil, die Art der anzuzeigenden Mitteilung und die Bewegungsgeschwindigkeit der Mitteilung unter der Kontrolle einer Rechnervorrichtung durchgeführt werden.

6. Verfahren nach einem der vorangehenden Ansprüche, dadurch gekennzeichnet, daß die Infrarotstrahlung in Form von Impulsen ausgesendet wird und in den aktiven Teil der pulsierten Infrarotsignale kodierte Informationssignale eingefügt werden, die die Art der verwendeten Kamera und ggf. die Relativstellung der Kamera bezogen auf die Anzeigetafel angeben.

7. Verfahren nach einem der vorangehenden Ansprüche, dadurch gekennzeichnet, daß ein Identifikationssignal des erregten Infrarotstrahlungsfühlers zur Rechnervorrichtung ausgesendet wird.

8. Verfahren nach einem der vorangehenden Ansprüche, dadurch gekennzeichnet, daß gemäß einem vorbestimmten Programm der Rechnervorrichtung der Ort der Mitteilung auf den verschiedenen Anzeigetafelelementen in Abhängigkeit von der Erregungszeit jedes Infrarotstrahlungsfühlers vorgesehen wird, wenn die in Bewegung befindliche Kamera mit einem Fokus arbeitet, der einem mittleren Bildaufnahmefeld entspricht.

9. Verfahren nach einem der vorangehenden Ansprüche, dadurch gekennzeichnet, daß dann, wenn keine Infrarotstrahlung von einem Infrarotstrahlungsfühler nach einer Erregung von z.B. zwei auf den Tafeln vorangehenden Infrarotstrahlungsfühlern empfangen worden ist, und gemäß dem besagten Programm, der Ort der anzuzeigenden Mitteilung auf den verschiedenen Anzeigetafelelementen unter Berücksichtigung der Geschwindigkeit der Kamera bestimmt wird.

10. Verfahren nach einem der vorangehenden Ansprüche, dadurch gekennzeichnet, daß beim übergang von einer mit einem mittleren Bildaufnahmefeld arbeitenden Kamera auf eine mit einem weiten Bildfeld arbeitende Kamera oder umgekehrt und dann, wenn man in dem letzten betrachteten Bildaufnahmefeld nach Ablauf einer vorbestimmten Zeit bleibt, in geeigneter Weise der Ort der Mitteilung auf den verschiedenen Anzeigetafelelementen bestimmt wird.

11. Verfahren nach einem der vorangehenden Ansprüche, dadurch gekennzeichnet, daß bei einem plötzlichen Bildaufnahmewechsel von einer Zone zu einer anderen Zone nach Erregung eines Fühlers über einen vorbestimmten Zeitraum hinaus in der neuen Stellung der Kamera, die der anderen Zone entspricht, der Ort der Mitteilung auf den verschiedenen Anzeigeelementen in Abhängigkeit von der Bewegungsgeschwindigkeit der Kamera von einer Zone zur anderen bestimmt wird.

12. Verfahren nach einem der vorangehenden Ansprüche 1 bis 11, dadurch gekennzeichnet, daß bei dem Ubergang von einer Bildaufnahmezone der Kamera zu einer anderen Bildaufnahmezone nach aufeinanderfolgender Erregung der Infrarotstrahlungsfühler auf den Anzeigetafeln während einer Zeitdauer, die geringer ist als eine vorbestimmte Zeit, die Anzeige der Mitteilung auf einer geeigneten Anzahl von Anzeigetafelelementen von dem Fühler ausgehend begonnen wird, der um vier Fühler vom dritten entfernt liegt, der die Interpolation der Bewegungsgeschwindigkeit der Kamera von der Zone zur anderen Zone ermöglicht hat.

13. Anzeigeeinrichtung zur Ausführung des Verfahrens nach einem der Ansprüche 1 bis 12, die eine gewisse Anzahl von mit Anzeigeelementen versehenen Tafeln, die an einem Sportveranstaltungsort wie einem Fußballfeld, Basketballfeld oder dergleichen angeordnet sind, und eine gewisse Anzahl von Fernsehkameras zur übertragung auf wenigstens ein Fernsehterminal, wie einen Fernsehempfänger, der genannten Sportveranstaltung mit Erscheinen auf dem Terminal wenigstens einer der Anzeigetafeln besitzt, dadurch gekennzeichnet, daß sie für jede Kamera (C1-C2) ein Element (CP), das auf jeder Kamera angeordnet ist und auf ein Anzeigeorgan (V1; V2) zur Anzeige des Betriebszustandes der Kamera anspricht, eine Vorrichtung (CR1, CA1,...; CR2, CA2,...), die durch das genannte empfindliche Element erregt wird, zur Auslösung der Anzeige einer Publizitätsmitteilung jedes Mal, wenn wenigstens eine der Anzeigetafeln sich im Bildaufnahmebereich der in Betrieb befindlichen Kamera befindet, und eine Rechnervorrichtung (100) besitzt, die die Ausgangsinformationen der verschiedenen Auslösevorrichtungen empfängt, und logische Signale zu jeder der Kontrolloder Steuervorrichtungen (20) für die jeder Tafel (1, 2,...n) zugeordnete Anzeige zur Steuerung der Bewegung der Mitteilung auf den Anzeigetafelelementen in Abhängigkeit von den Bewegungen der Kamera zum ständigen Erscheinen der Mitteilung auf dem Fernsehterminal sendet.

14. Einrichtung nach Anspruch 13, dadurch gekennzeichnet, daß die genannte Auslösevorrichtung eine Infrarotstrahlungskanone (CR1; CR2), die in der Bildaufnahmeachse der genannten Kamera ausgerichtet ist, und eine gewisse Anzahl von Infrarotstrahlungsfühlern (CA1, CA2,... CAn), die in regelmäßigen Abständen auf den Anzeigetafeln angeordnet und mit der Rechnervorrichtung (100) verbunden sind, besitzt, wobei jedes Ausgangssignal eines die Infrarotstrahlung empfangenden Fühlers eine den Fühler identifizierende Information und eine andere Information bezüglich des Arbeitsfokuses der Kamera enthält, so daß die Rechnervorrichtung die verschiedenen Anzeigetafelelemente adressiert, um die Mitteilung auf der Tafel gemäß einer dem Fokus der verwendeten Kamera entsprechenden Länge anzuzeigen.

15. Einrichtung nach einem der Ansprüche 13 oder 14, dadurch gekennzeichnet, daß die von der Rechnervorrichtung (100) ausgesendeten und vorzugsweise in ASCII kodierten logischen Signale ferner die genannte Bewegungssteuerung, die anzuzeigende Mitteilungsart, den Ort des Anfangs der Mitteilung für jede Tafel, den jede Tafel betreffenden Teil der Mitteilung und die Bewegungsgeschwindigkeit der Mitteilung auf den Anzeigetafelelementen angeben.

16. Einrichtung nach einem der Ansprüche 13 bis 15, dadurch gekennzeichnet, daß sie eine elektronische Vorrichtung (110) zur Pulsierung der Infrarotstrahlung, die von der Sendediode (D) der Infrarotstrahlungskanone (CR1, CR2) der in Betrieb befindlichen Kamera ausgesendet wird, und Mittel (170, 180) zum Einfügen der Informationen, die die Art der im Betrieb befindlichen Kamera und ggf. die Stellung der Kamera bezogen auf die Anzeigetafel betreffen, in den aktiven Teil des pulsierten Signals, aufweist.

17. Einrichtung nach einem der Ansprüche 13 bis 16, dadurch gekennzeichnet, daß das empfindliche Element (CP) eine photoelektrische Zelle besitzt, die in der Nähe des Anzeigers (V1, V2) für die Antenne jeder Kamera angeordnet ist.

18. Einrichtung nach einem der Ansprüche 13 bis 17, dadurch gekennzeichnet, daß jede Kontroll- und Steuervorrichtung (20) einen Mikroprozessor (201) besitzt, der mit einem RAM-Speicher (203) verbunden ist, in dem die Teile der anzuzeigenden Mitteilungen gespeichert sind.

**Claims**

1. A method of displaying information, such as for example advertising messages adapted to run on a certain number of panels with display elements arranged at a place of sporting events such as football, basket-ball or other games intended to be televised to at least one final television receiving means from television cameras, at least one of the display panels appearing at the said final receiving means, characterized in that it consists in starting the display of an advertising message every time at least one of the panels is located in the shooting field of an operating one of the cameras and in causing the displacement of the message on the panels according to the movements of the camera in such a manner as to cause the said message to continually appear at the said final television receiving means.

2. A method according to claim 1, characterized in that it consists in determining the length or size of the said advertising message according to the operating focal distance of the said camera in such a manner that the message is always entirely located in the shooting field of the camera.

3. A method according to claim 1 or 2, characterized in that it consists in starting the said display from an infrared radiation emitted from the camera at the time of its putting into operation and received by an infrared radiation pick-up arranged on one of the display panels.

4. A method according to one of the foregoing claims, characterized in that it consists in determining the position of the beginning of the display of the said message on the display panel and in determining also the message portion concerned for each display panel according to the operating focal distance of the said camera.

5. A method according to one of the foregoing claims, characterized in that the said message displacement, the said display starting position, the said message portion concerned for each panel, the type of message to be displayed and the message displacement speed are controlled from a computer device.

6. A method according to one of the foregoing claims, characterized in that it consists in pulsing the said infrared radiation and in inserting into the active portion of the pulsed infrared signal coded information signals indicating the nature of the camera used and, if appropriate, the relative position of the camera with respect to the display panels.

7. A method according to one of the foregoing claims, characterized in that it consists in emitting towards the computer device a signal of identification of the infrared radiation pick-up excited.

8. A method according to one of the foregoing claims, characterized in that it consists in providing, according to a predetermined program of the computer device, for the location of the message on the various display panel elements according to the time of excitation of each infrared radiation pick-up when the camera in movement is operating at a focal distance corresponding to a medium-shooting field.

9. A method according to one of the foregoing claims, characterized in that it also consists, when no infrared radiation is received by an infrared radiation pick-up after, for example, the excitation of the preceding two infrared radiation pick-ups on the panels, and according to the aforesaid program, in determining the location of the message to be displayed on the various display panel elements taking into account the camera displacement speed.

10. A method according to one of the foregoing claims, characterized in that, in case of a passing from a camera operating in medium-shooting-field mode to a camera operating in wide-shooting-field mode, or vice-versa, while remaining in the last shooting field considered after the end of a predetermined period, it consists in determining in an appropriate manner the location of the message on the various display panel elements.

11. A method according to one of the foregoing claims characterized in that, in case of an abrupt change of shooting from one zone towards another zone subsequent to excitation beyond a predetermined time of a pick-up in the new position of the camera corresponding to the other zone concerned, it consists in determining the location of the message on the various panel elements according to the speed of displacement of the camera from one zone to the other.

12. A method according to one of claims 1 to 11, characterized in that, in case of a passing from one camera shooting zone to another shooting zone with consecutive excitation of the infrared radiation pick-ups on the display panels of a duration shorter than a predetermined time, it consists in starting the display of the message on an appropriate number of display panel elements from the pick-up located four pick-ups farther than the third pick-up having allowed the interpolation of the speed of displacement of the camera from the zone towards other zones.

13. A display system for carrying out the method according to one of claims 1 to 12, including a certain number of panels with display elements arranged at a place of sporting events such as football, basket-ball or other games, a certain number of television cameras for televising to at least one final television receiving means, such as a television receiver set, of the said sporting event, at least one of the display panels appearing at the said final television receiving means, characterized in that it includes, in association with each of the cameras (C1, C2), an element (C1P) arranged on each of the cameras and sensitive to an "on-the-air" visual indicator (V1; V2) of the camera and a device (CR1, CA1,...; CR2, CA1...) activated by the said sensitive element, for starting the display of an advertising message every time at least one of the display panels is located in the shooting field of the camera in operation; a computer device (100) receiving information from the outputs of the various starting devices and emitting logic signals towards each of the display monitoring and control devices (20) associated with each panel (1, 2,..., n) for causing the displacement of the message on the display panel elements according to the movements of the camera in such a manner as to cause the said message to continually appear at the said final television receiving means.

14. A system according to claim 13, characterized in that the said starting device includes an infrared radiation gun (CR1; CR2) aligned with the shooting axis of the said camera and a certain number of infrared radiation pick-ups (CA1, CA2,...CAn) arranged at regular intervals on the display panel and connected to the computer device (100), each output signal of a pick-up receiving the infrared radiation containing information identifying the said pick-up and other information relating to the operating focal distance of the camera, so that the computer device addresses the various display panel elements to display the message on the panel over a length corresponding to the focal distance of the camera used.

15. A system according to claim 13 or 14, characterized in that the said, preferably ASCII-coded, logic signals emitted by the said computer device (100) indicate the control of the said displacement and, in addition, the type of message to be displayed, the display starting position for each display panel, the message portion concerned for each panel and the message displacement speed on the display panel elements.

16. A system according to one of claims 13 to 15, characterized in that it includes an electronic device (110) for pulsing the infrared radiation emitted by the emitting diode (D) of the infrared radiation gun (CR1, CR2) of the camera in operation and means (170, 180) for inserting into the active portion of the pulsed signal information relating to the nature of the camera in operation and, if appropriate, to the position of the camera with respect to the display panels.

17. A system according to one of claims 13 to 16, characterized in that the said sensitive element (C1P) includes a photocell placed against the "on-the-air" indicator light (V1, V2) of each camera.

18. A system according to one of claims 13 to 17, characterized in that each monitoring and control device (20) includes a microprocessor (201) connected to a random access memory (203) in which are stored the portions of the messages to be displayed.

Fig. 1

Fig. 2

**FIG. 3**

**FIG. 4**

2